# EUROPÄISCHE PATENTSCHRIFT

(11) **EP 3 591 271 B1**
(45) Veröffentlichungstag und Bekanntmachung des Hinweises auf die Patenterteilung: **17.02.2021**
(21) Anmeldenummer: 18181236.3
(22) Anmeldetag: 02.07.2018
(51) Int. Cl.: F16K 11/074, F16K 3/08

(54) **VENTILOBERTEIL**
UPPER PART OF A VALVE
PARTIE SUPÉRIEURE DE SOUPAPE

(43) Veröffentlichungstag der Anmeldung: 08.01.2020
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- DE-C2- 3 207 895
- US-A- 3 425 660

## Beschreibung

Die Erfindung betrifft ein Ventiloberteil, insbesondere für Sanitärarmaturen, mit einem in einem Ventilgehäuse einer Armatur befestigbaren, hülsenartigen Kopfstück, das von einer einen Griffanschluss aufweisenden Spindel mittig durchsetzt ist, die in dem Kopfstück um ihre Längsachse drehbar gelagert ist und über die ein Ventilkörper betätigbar ist, wobei an der Spindel innerhalb des Kopfstücks wenigstens ein radial auskragender Ausleger angeformt ist, der mit einer Seitenfläche an wenigstens einem in dem Kopfstück angeordneten Anschlag anlegbar ist, wodurch der maximalen Drehwinkel der Spindel begrenzt ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Auf dem Griffanschluss der Spindel wird ein Drehgriff oder Hebel befestigt. Bei bekannten Ventiloberteilen (vgl. DE 32 07 895 C2) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Lippendichtung angeordnet, die an der Einlassscheibe anliegt. Die Dichtung überragt die Stirnfläche des Ventiloberteils. Sie dient zur Abdichtung sowohl zur Einlassscheibe als auch zum Ventilsitz der Armatur.

Der maximale Drehwinkel der mit der Steuerscheibe über den Mitnehmer formschlüssig verbundenen Spindel ist über zwei an der Innenwandung des Kopfstücks angeformte Anschlagflächen begrenzt, an welche ein an die Spindel angeformter Ausleger anschlagbar ist. Übliche maximale Drehwinkel sind 90° und 180°. Bei einem maximalen Drehwinkel von 180° ist ein nach einer Seite radial auskragender Ausleger an der Spindel angeformt. Zur Begrenzung eines maximalen Drehwinkels von 90° kann auch ein an zwei diametral gegenüberliegenden Seiten radial auskragender Ausleger an der Spindel angeformt sein, wobei entsprechend vier Anschlagflächen an der Innenwandung des Kopfstücks angeordnet sind. Ein solches Ventiloberteil ist beispielsweise in der US 3,425,660 A beschrieben.

Bei übermäßigen auf die Spindel einwirkenden Drehmomenten, wie sie beispielsweise bei Krankenhausarmaturen mit langen Bediengriffen zur Ellenbogenbetätigung auftreten, kann es zur Verwindung der Spindel kommen, wodurch der Ausleger unter Beschädigung der Anschlagfläche in Richtung Steuerscheibe gezwängt wird, was eine Zerstörung des Ventiloberteils zur Folge haben kann. Dieser Effekt tritt insbesondere bei Ventiloberteilen mit geringen Abmessungen auf, bei denen Spindel und Anschlagflächen entsprechend klein dimensioniert sind.

Hier will die Erfindung Abhilfe schaffen. Der Erfindung liegt die Aufgabe zugrunde, ein Ventiloberteil bereitzustellen, bei dem auch bei übermäßig auf die Spindel einwirkenden Drehmomenten Beschädigungen entgegengewirkt ist. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil bereitgestellt, bei dem auch bei hohen, auf die Spindel einwirkenden Drehmomenten Beschädigungen vermieden sind. Dadurch, dass an dem Ausleger seitlich ein Überstand angeformt ist, der bei Anlage des Auslegers an einem Anschlag des Kopfstücks diesen Anschlag zumindest bereichsweise überdeckt, stützt sich der Überstand in dem Fall, dass eine Verwindung der Spindel auftritt, auf dem Anschlag ab, wodurch eine Bewegung des Auslegers in Richtung Steuerscheibe verhindert ist. Der an dem Ausleger angeformte seitliche Überstand ist dabei so angeordnet, dass bei Anlage des Auslegers an dem Anschlag des Kopfstücks zwischen Überstand und Anschlag nur ein minimaler Abstand vorhanden ist.

In Weiterbildung der Erfindung sind an die Innenmantelfläche des Kopfstücks ein oder zwei kreisbogenförmige Stege angeformt, durch deren Stirnflächen jeweils ein Anschlag gebildet ist. Hierdurch ist eine bereichsweise radial umlaufende Auflagefläche vorhanden, durch die eine gute Abstützung eines diese Auflagefläche überragenden Überstands des Auslegers ermöglicht ist.

In Ausgestaltung der Erfindung weist der Ausleger zumindest bereichsweise einen T-förmigen Querschnitt auf, wodurch auf beiden Längsseiten ein Überstand gebildet ist. Hierdurch ist eine einfache Fertigung des Überstands ermöglicht. Durch den T-förmigen Querschnitt ist jeweils ein seitlicher Überstand zur Abstützung an den beiden den Drehwinkel beschränkenden Anschlägen gebildet.

Der Ventilkörper ist erfindungsgemäß durch eine drehbar angeordnete Steuerscheibe gebildet, die auf einer drehfest angeordneten Einlassscheibe aufliegt, wobei an die Spindel endseitig, an ihrem Ausleger eine Scheibe angeformt ist, an deren der Spindel abgewandten Seite ein Mitnehmer angeformt ist, der in eine Ausnehmung der Steuerscheibe eingreift. Dabei ist der Mitnehmer an die Scheibe angeformt, welche axial an einem in dem Kopfstück angeordneten Absatz anliegt. Durch diese Anordnung ist bei Anlage des Auslegers an einem Anschlag dieser Anschlag zwischen der Scheibe auf der einen Seite und dem seitlichen Überstand des Auslegers auf der anderen Seite umgriffen, wodurch auf die Spindel sowie den an dieser angeformten Ausleger einwirkende Verwindungskräfte zuverlässig abgeführt werden können. Einer Abwärtsbewegung des Auslegers bei auftretender Verwindung der Spindel ist so zuverlässig entgegengewirkt.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

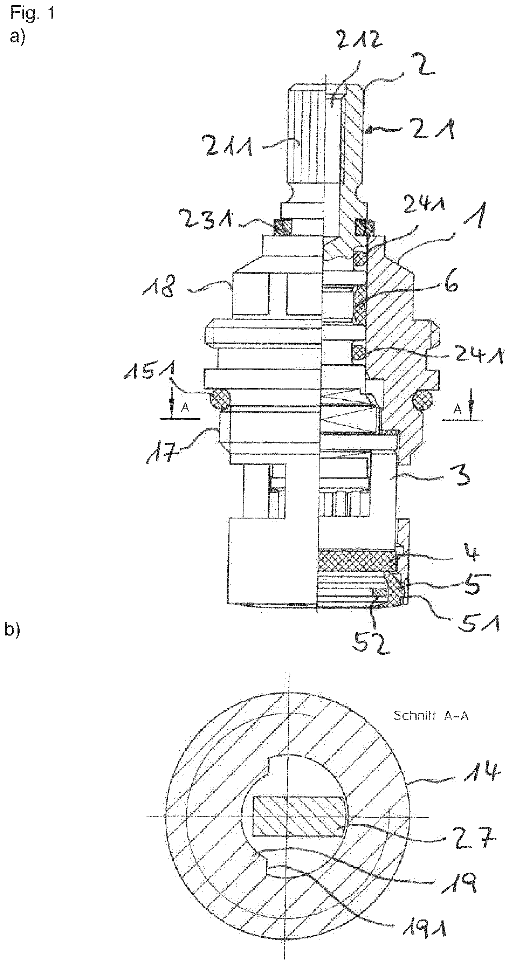

- Figur 1: die schematische Darstellung eines Ventiloberteils mit Spindel in Mittelposition
a) im Teilschnitt;
b) im Querschnitt A-A;

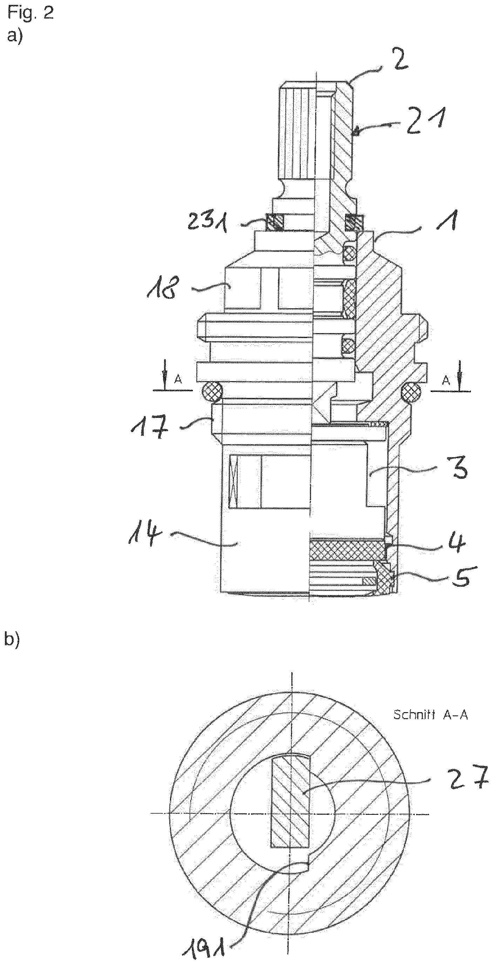

- Figur 2: die schematische Darstellung des Ventiloberteils aus Figur 1 mit Spindel in Anschlagposition
a) im Teilschnitt;
b) im Querschnitt A-A;

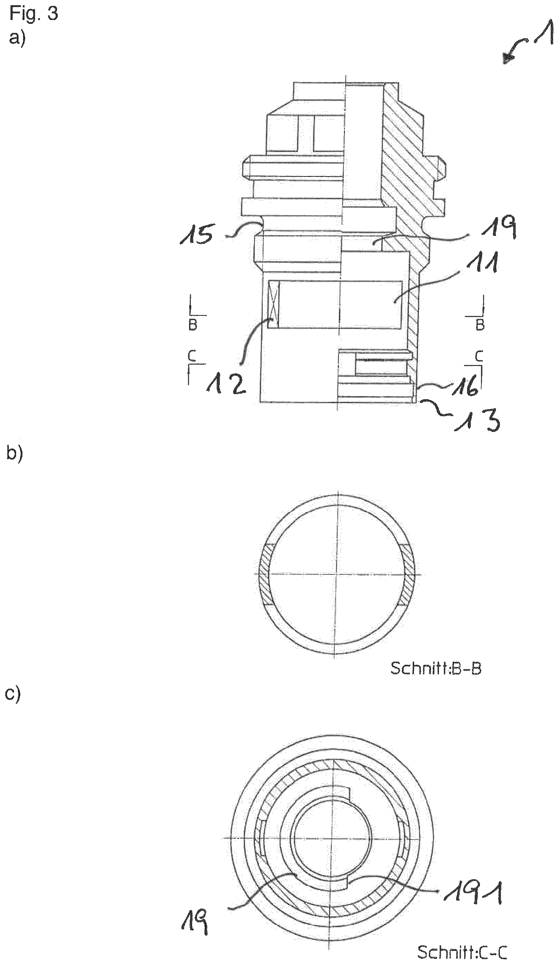

- Figur 3: die schematische Darstellung des Kopfstücks des Ventiloberteils aus Figur 1
a) im Teilschnitt;
b) im Querschnitt B-B;
c) im Querschnitt C-C;

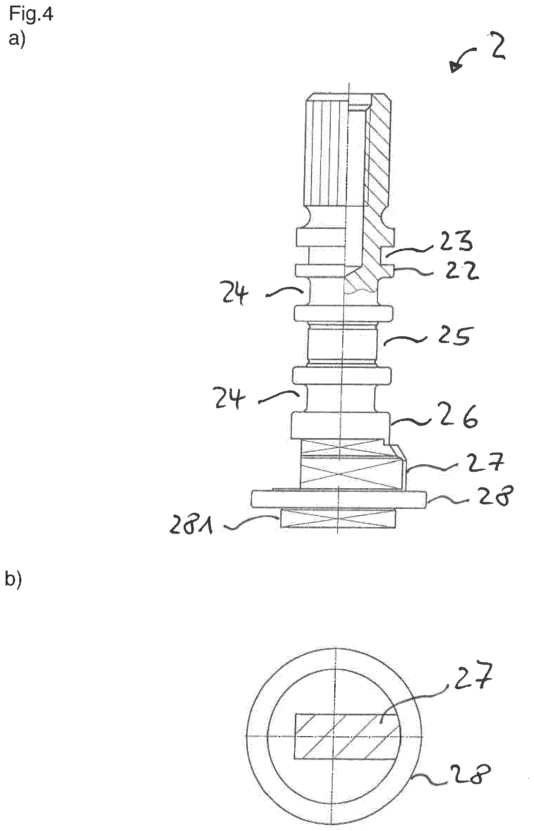

- Figur 4: die schematische Darstellung der Spindel des Ventiloberteils aus Figur 1
a) im Teilschnitt;
b) im Querschnitt;

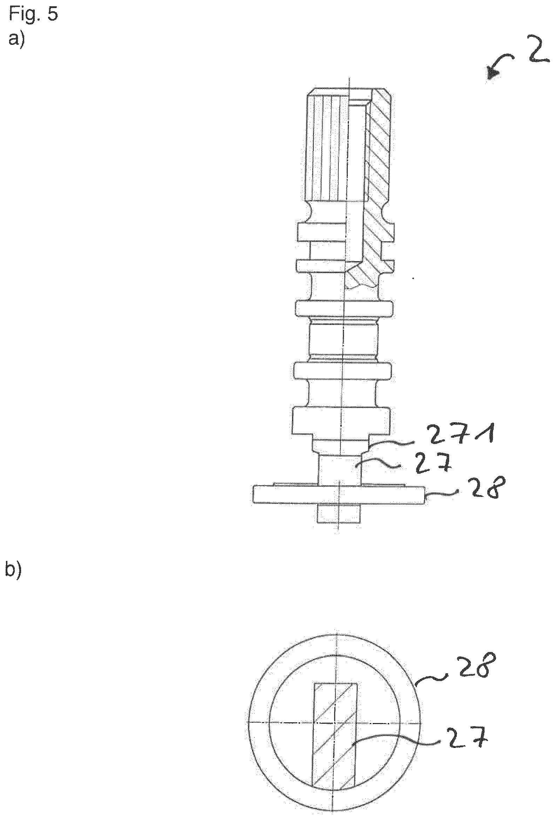

- Figur 5: die schematische Darstellung der Spindel aus Figur 4 in um 90° verdrehter Position
a) im Teilschnitt;
b) im Querschnitt;

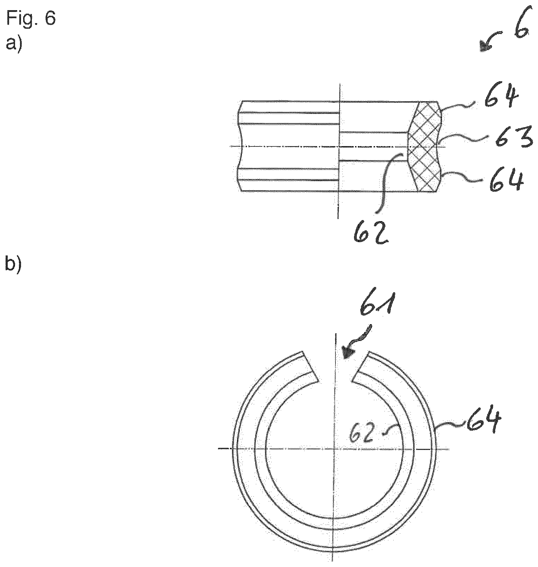

- Figur 6: die schematische Darstellung der Gleithülse des Ventiloberteils aus Figur 1
a) im Teilschnitt;
b) in der Draufsicht;
- Figur 7: die schematische Darstellung des Kopfstücks eines Ventiloberteils in einer weiteren Ausführungsform mit auf 90° begrenztem Schwenkwinkel
a) im Teilschnitt;
b) im Querschnitt B-B;
c) im Querschnitt C-C;
- Figur 8: die schematische Darstellung einer Spindel zum Einsatz in dem Kopfstück aus Figur 7
a) im Teilschnitt
b) im Querschnitt durch den Ausleger (Draufsicht),

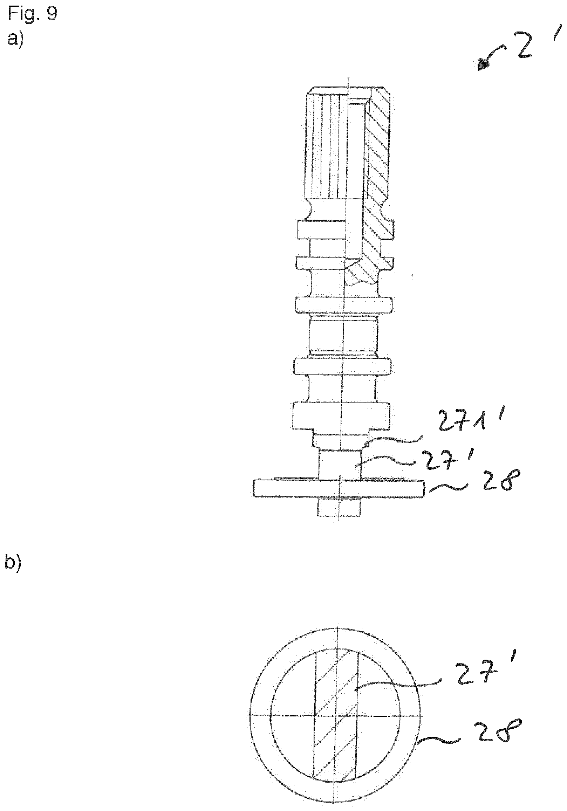

- Figur 9: die schematische Darstellung der Spindel aus Figur 8 in um 90° verdrehter Position
a) im Teilschnitt;
b) im Querschnitt durch den Ausleger (Draufsicht).

Das als Ausführungsbeispiel gewählte Ventiloberteil weist ein Kopfstück 1 auf, das von einer in ihm radial geführten Spindel 2 mittig durchsetzt ist. Mit der Spindel 2 ist eine Steuerscheibe 3 formschlüssig verbunden und im Kopfstück 1 radial geführt. An dem der Spindel 1 abgewandten Ende der Steuerscheibe 3 ist eine Einlassscheibe 4 in dem Kopfstück 1 vorgesehen, an die sich eine Lippendichtung 5 anschließt, die mit dem Ventilsitz einer - nicht dargestellten - Armatur zur Anlage kommt.

Das Kopfstück 1 ist aus einem symmetrischen Hohlkörper gebildet, dessen beide Stirnflächen offen sind. Auf seiner der - nicht dargestellten - Armatur zugewandten Seite weist das Kopfstück 1 einen hülsenförmigen Teil 14 auf. In dem hülsenförmigen Teil 14 sind Durchtrittsfenster 11 vorgesehen, die von Längsstegen 12 begrenzt sind. Im Ausführungsbeispiel sind zwei durch Längsstege 12 begrenzte Fenster 11 angeordnet. Nach dem Einbringen des Kopfstücks 1 in eine Armatur liegt ein Bund 13 des Kopfstücks 1 auf dem Gehäuse der Armatur auf. Der Bund 13 weist auf seiner dem Durchtrittsfenster 11 zugewandten Seite eine Ringnut 15 zur Aufnahme eines O-Rings 151 auf. In dem hülsenförmigen Teil 14 ist innen im Bereich des dem Ventilsitz zugewandten Endes eine Hinterdrehung 16 angeordnet. An seinem dem Durchtrittsfenster 11 entgegengesetzten Ende ist an dem Kopfstück 1 ein Außengewinde 17 angeformt, an das sich ein Außensechskant 18 zum Eingriff eines Schraubwerkzeugs anschließt.

Die Spindel 2 ist im Wesentlichen massiv ausgeführt. Sie ist an ihrer dem Wasserzulauf abgewandten Stirnseite mit einem Griffanschluss 21 versehen, der außen als Außenvielkant 211 ausgeführt und mit einem Sackloch 212 mit Innengewinde für die Befestigung eines - nicht dargestellten - Drehgriffs versehen ist. An den Griffanschluss 21 schließt sich ein zylindrischer Abschnitt 22 an, mit dem die Spindel 2 in dem Kopfstück 1 radial geführt ist und in dem zwei Ringnuten 24 zur Aufnahme von O-Ringen 241 eingebracht sind, welche die Spindel 2 gegen das Kopfstück 1 abdichten. Zwischen den jeweils einen O-Ring 241 aufnehmenden Ringnuten 24 ist eine weitere Ringnut 25 zur Aufnahme einer Gleitbuchse 6 angeordnet. Zwischen dem Griffanschluss 21 und dem zylindrischen Abschnitts 22 ist weiterhin ein Einstich 23 vorgesehen, in den eine Wellensicherung 231 in Form eines Sprengrings federnd eingelegt ist.

An den zylindrischen Abschnitt 26 ist axial ein Ausleger 27 angeformt, der im Wesentlichen einen T-förmigen Querschnitt aufweist und der an einer Seite über den Durchmesser des zylindrischen Abschnitts 25 hinausragt. Durch den T-förmigen Querschnitt des Auslegers 27 ist an dessen Seitenwänden jeweils ein Überstand 271 gebildet. Der Ausleger 27 ist derart ausgebildet, dass er an zwei definierten Schwenkpositionen an jeweils einer Anschlagfläche 191 eines an der Innenwandung des Kopfstücks 1 angeformten Anschlags 19 mit einer Seitenfläche anliegt, wobei der an dieser Seitenfläche angeordnete Überstand 271 den Anschlag 19 mit geringem axialem Abstand überragt. An den Ausleger 27 ist eine Scheibe 28 angeformt, die auf ihrer der - nicht dargestellten - Armatur zugewandten Seite einen Mitnehmer 281 aufweist. Mit ihrer dem Mitnehmer 281 entgegengesetzten Oberseite liegt die Scheibe 28 an der dieser Scheibe 28 zugewandten Unterseite des in Form eines kreisbogenförmigen Steges ausgebildeten Anschlags 19 des Kopfstücks 1 an.

Die Steuerscheibe 3 ist im Wesentlichen als kreisrunde Scheibe ausgebildet, aus der ein Kreisausschnitt ausgenommen ist. Der Kreisausschnitt weist im Ausführungsbeispiel einen Winkel von ca. 180° auf. Auf ihrer der Spindel 2 zugewandten Oberseite ist die Steuerscheibe 3 weiterhin mit einer Aufnahme für den Mitnehmer 281 der Spindel 2 versehen.

An die Einlassscheibe 4 angrenzend ist in das Kopfstück 1 eine Lippendichtung 5 eingebracht, die außen umlaufend mit einem Steg 51 versehen ist, der in der endseitig in dem hülsenförmigen Teil 14 des Kopfstücks 1 hierfür vorgesehenen Hinterdrehung 16 eingreift. Die Lippendichtung 5 ist über einen eingebrachten Stützring 52 in ihrer Position gehalten, wobei die Lippen der Lippendichtung 5 dichtend gegen die Einlassscheibe 4 sowie gegen den - nicht dargestellten - Armaturensitz anliegen.

Die Gleitbuchse 6 ist als ringförmiger Kunststoffkörper ausgebildet, der an einer Seite durch einen V-förmigen Schlitz 61 getrennt ist. Die Innenmantelfläche der Gleitbuchse 6 ist im Wesentlichen konvex ausgebildet und weist eine mittig angeordnete, umlaufende erste Kontaktfläche 62 auf. Der ersten Kontaktfläche 62 gegenüberliegend weist die Außenmantelfläche der Gleitbuchse 6 eine konkave Wölbung 63 auf, wodurch zwei parallel zueinander angeordnete, umlaufende zweite Kontaktflächen 64 begrenzt sind. Im montierten Zustand liegt die Gleitbuchse 6 mit der ersten Kontaktfläche 62 an dem Nutengrund der Ringnut 25 der Spindel 2 an, wobei sie mit ihren versetzt zu ersten Kontaktfläche angeordneten zweiten Kontaktflächen 64 an der Innenmantelfläche des Kopfstücks 1 anliegt. (Alternativ kann die Gleitbuchse 6 auch an ihrer Außenmantelfläche eine mittige zweite Kontaktfläche und auf ihrer Innenmantelfläche zwei parallel zueinander verlaufende, versetzt zu der inneren zweiten Kontaktfläche angeordnete erste Kontaktflächen aufweisen.) Auf diese Weise ist eine elastische und vollständig reversible Gleitbuchse 6 zwischen der Spindel 2 und dem Kopfstück 1 erzielt. Durch den V-förmigen Schlitz 61 ist die Gleitbuchse 6 einfach auf die Ringnut 25 der Spindel 2 aufclipsbar.

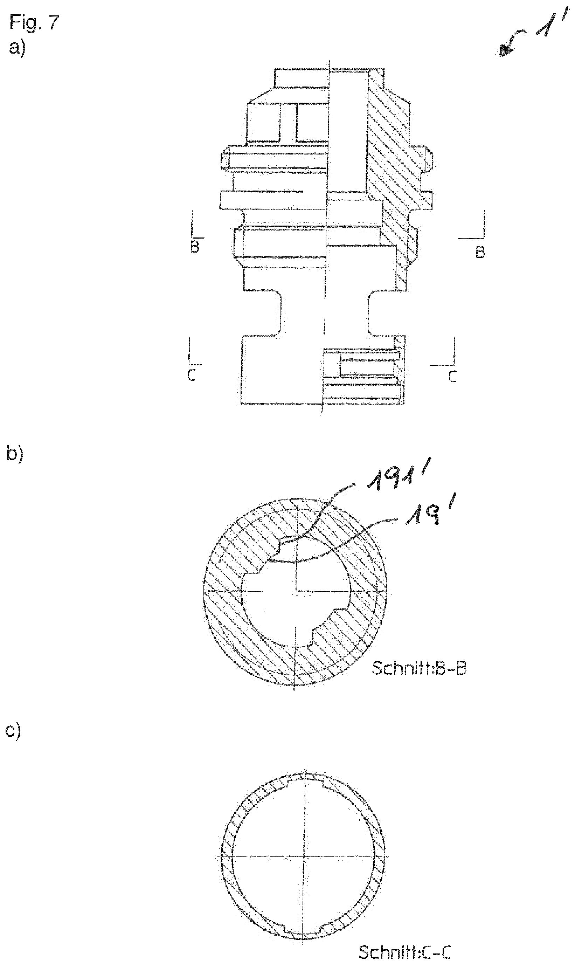

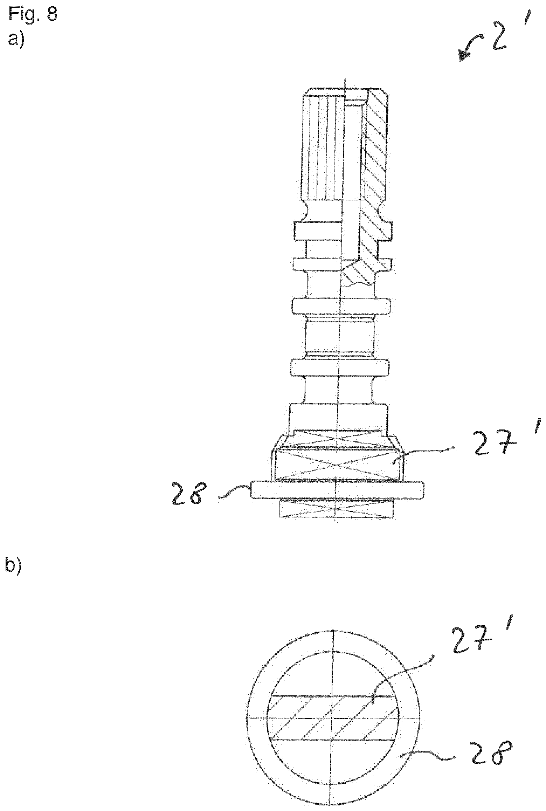

In den Figuren 7 und 8 sind Kopfstück und Spindel eines Ventiloberteils in einer weiteren Ausführungsform gezeigt, bei dem die Steuerscheibe einen Kreisausschnitt von ca. 90° aufweist und ein maximaler Drehwinkel der Spindel von 90° eingerichtet ist. Hierzu ist der Ausleger 27', der wiederum einen T-förmigen Querschnitt aufweist, wodurch an seinen beiden Seitenfläche jeweils ein Überstand 271' gebildet ist, derart ausgebildet, dass der an zwei diametral gegenüberliegenden Seiten über den Durchmesser des zylindrischen Abschnitts 25 der Spindel 2' hinausragt. Innerhalb des Kopfstücks 1 sind in diesem Ausführungsbeispiel gegenüberliegend zwei als kreisbogenförmige Stege ausgebildete Anschläge 19' angeordnet, an deren Anschlagflächen 191' in einer Anschlagposition der Spindel 2' jeweils eine Seitenfläche des Auslegers 27' endseitig anliegt. Hierbei überragt wiederum der an der jeweiligen Seitenfläche angeordnete Überstand 271' endseitig den Anschlag 19', an dem diese Seitenfläche anliegt, in geringem Abstand. In dieser Ausführungsform kann sich der Ausleger 27' folglich in jeder Anschlagstellung der Spindel 2' mit zwei Überständen 271' auf jeweils einem Anschlag 19' abstützen.

## Patentansprüche

1. Ventiloberteil, insbesondere für Sanitärarmaturen, mit einem in einem Ventilgehäuse einer Armatur befestigbaren, hülsenartigen Kopfstück (1), das von einer einen Griffanschluss aufweisenden Spindel (2) mittig durchsetzt ist, die in dem Kopfstück (1) um ihre Längsachse drehbar gelagert ist und über die ein Ventilkörper betätigbar ist, wobei an der Spindel (2) innerhalb des Kopfstücks (1) wenigstens ein radial auskragender Ausleger (27) angeformt ist, der mit einer Seitenfläche an wenigstens einen in dem Kopfstück (1) angeordneten Anschlag (19) anlegbar ist, wodurch der maximale Drehwinkel der Spindel (2) begrenzt ist wobei an den Ausleger (27) seitlich ein Überstand (271) angeformt ist, der bei Anlage des Auslegers (27) an einem Anschlag (19) des Kopfstücks (1) die-Anschlag (19) zumindest bereichsweise überdeckt, wobei der Ventilkörper durch eine drehbar angeordnete Steuerscheibe (3) gebildet ist, die auf einer drehfest angeordneten Einlassscheibe (4) aufliegt, **dadurch gekennzeichnet, dass** an die Spindel (2) endseitig, an dem Ausleger (27) eine Scheibe (28) angeformt ist, an deren der Spindel (27) abgewandten Seite ein Mitnehmer (281) angeformt ist, der in eine Ausnehmung der Steuerscheibe (3) eingreift und dass die Scheibe (28) axial an einem in dem Kopfstück (1) angeordneten Absatz anliegt.

2. Ventiloberteil nach Anspruch 1, **dadurch gekennzeichnet, dass** an die Innenmantelfläche des Kopfstücks (1) ein oder zwei kreisbogenförmige Anschläge (19) angeformt sind, durch deren Stirnflächen jeweils eine Anschlagfläche (191) gebildet ist.

3. Ventiloberteil nach einem der vorgenannten Ansprüche, **dadurch gekennzeichnet, dass** der Ausleger (27) zumindest bereichsweise einen T-förmigen Querschnitt aufweist, wodurch auf beiden Längsseiten ein Überstand (271) gebildet ist.

4. Ventiloberteil nach Anspruch 1, **dadurch gekennzeichnet, dass** der Absatz durch wenigstens einen an der Innenmantelfläche des Kopfstücks (1) angeformten Anschlag (19) gebildet ist.

## Claims

1. Upper part of a valve, in particular for sanitary fittings, with a sleeve-like head piece (1) which can be fastened in a valve housing of a sanitary fitting, which is centrally penetrated by a spindle (2) having a handle connection, which spindle is mounted in the head piece (1) so as to be rotatable about its longitudinal axis and via which a valve body can be operated, wherein at least one radially projecting cantilever (27) is formed on the spindle (2) inside the head piece (1), which can be placed with one side face against at least one stop (19) arranged in the head piece (1), whereby the maximum angle of rotation of the spindle (2) is limited, wherein a projection (271) is laterally formed on the cantilever (27), which, on abutment of the cantilever (27) against a stop (19) of the head piece (1), at least partially covers said stop (19), wherein the valve body is formed by a rotatably arranged control disc (3), which rests on a non-rotatably arranged inlet disc (4), **characterised in that** at the end of the spindle (2) a disc (28) is formed on the cantilever (27), on whose side facing away from the spindle (2) a driver (281) is formed on, which engages in a recess of the control disc (3) and that the disc (28) axially rests on a shoulder arranged in the head piece (1).

2. Upper part of a valve according to claim 1, **characterised in that** one or two circular-arc-shaped stops (19) are formed on the inner surface of the head piece (1), the end faces of which respectively form a stop surface (191).

3. Upper part of a valve according to one of the previous claims, **characterised in that** the cantilever (27) has a T-shaped cross-section at least in some regions, whereby a projection (271) is formed on both longitudinal sides.

4. Upper part of a valve according to claim 1, **characterised in that** the shoulder is formed by at least one stop (19) moulded on the inner surface of the head piece (1).

## Revendications

1. Partie supérieure de soupape, en particulier pour robinetteries sanitaires, comprenant une pièce têtière (1) en forme de douille pouvant être fixée dans un corps de soupape d'une robinetterie, pièce têtière qui est traversée en son centre par une broche (2) présentant un raccordement de poignée, broche qui se trouve en appui rotatif autour de son axe longitudinal dans la pièce têtière (1) et via laquelle broche un corps de soupape est actionnable, sachant que contre la broche (2) à l'intérieur de la pièce têtière (1) est modelé au moins un bras (27) en porte-à-faux radial, bras qui peut être appuyé par une surface latérale contre au moins une butée (19) disposée dans la pièce têtière (1), faisant que l'angle de rotation maximal de la broche (2) est limité, sachant que contre le bras (27) est modelé latéralement un porte-à-faux (271) qui, en cas d'appui du bras (27) contre une butée (19) de la pièce têtière (1), recouvre au moins localement cette butée (19), sachant que le corps de soupape est formé par un disque de commande (3) disposé de façon à pouvoir tourner, reposant sur un disque d'admission (4) disposé de sorte à ne pas pouvoir tourner, **caractérisée en ce que** contre la broche (2) est modelé à l'extrémité contre le bras (27) un disque (28) sur le côté duquel ne regardant pas la broche (27) est modelé un taquet entraîneur (281) qui engrène dans un évidement du disque de commande (3), et **en ce que** le disque (28) applique axialement contre un épaulement disposé dans la pièce têtière (1).

2. Partie supérieure de soupape selon la revendication 1, **caractérisée en ce que** contre la surface enveloppante intérieure de la pièce têtière (1) sont modelées une ou deux butées (19) en arc de cercle, par les surfaces frontales desquelles est formée respectivement une surface butée (191).

3. Partie supérieure de soupape selon l'une des revendications précédentes, **caractérisée en ce que** la broche (27) présente au moins localement une section en T faisant que sur les deux côtés longitudinaux est formé un porte-à-faux (271).

4. Partie supérieure de soupape selon la revendication 1, **caractérisée en ce que** l'épaulement est formé par au moins une butée (19) modelée contre la surface enveloppante intérieure de la pièce têtière (1).
